Europäisches Patentamt

European Patent Office

Office européen des brevets

(11) Publication number: 0 246 768 B1

# EUROPEAN PATENT SPECIFICATION

(45) Date of publication of patent specification: **04.11.92**  (51) Int. Cl.[5]: **A21C 1/10**

(21) Application number: **87303755.0**

(22) Date of filing: **28.04.87**

(54) Method and apparatus for mixing.

(30) Priority: **23.05.86 GB 8612717**

(43) Date of publication of application:
**25.11.87 Bulletin 87/48**

(45) Publication of the grant of the patent:
**04.11.92 Bulletin 92/45**

(84) Designated Contracting States:
**DE ES FR GB IT NL SE**

(56) References cited:
CH-A- 326 039          DE-B- 1 030 787
FR-A- 676 414          FR-A- 2 515 001
GB-A- 2 067 787        US-A- 1 700 510

(73) Proprietor: **The BOC Group plc**
**Chertsey Road**
**Windlesham Surrey GU20 6HJ(GB)**

(72) Inventor: **Booker, Paul Ian**
**The Firs Horsham Road**
**Beare Green Dorking RH5 4PD(GB)**
Inventor: **Leeson, Richard Harvey**
**26 Worbeck Road**
**London SE20 7SW(GB)**

(74) Representative: **Wickham, Michael et al**
**c/o Patent and Trademark Department The**
**BOC Group plc Chertsey Road**
**Windlesham Surrey GU20 6HJ(GB)**

EP 0 246 768 B1

## Description

This invention relates to a method and apparatus for mixing. In particular, it relates to the mixing of dough, a step in the manufacture of bread and like products.

In the United Kingdom, much bread is made by the Chorleywood Bread Process. This process is described in publications of the FMBRA, for example, 'The Chorleywood Bread Process: the importance of air as a dough ingredient' (August 1977) N Chamberlain and T H Collins. In this process a dough comprising yeast, soya flour, fat and, if desired, emulsifier is inserted into a high-speed mixer. The dough is then mixed. The oxygen in the head space tends to undergo a reaction with an enzyme in the dough while the nitrogen remains unreacted, and forms bubbles in the dough which are subsequently expanded during the bread making process and are responsible for giving the baked bread its crumb structure.

The dough typically also includes ascorbic acid and potassium bromate as bread improvers. Ascorbic acid is converted in the dough to dehydroascorbic acid as a result of a reaction with atmospheric oxygen in the presence of the flour enzyme ascorbic oxidase. Potassium bromate also acts as an oxidant and, if present in sufficient quantity, it is effective even in conditions where there is a scarcity of atmospheric oxygen. Typically, the dough is mixed for about 5 minutes employing a relatively high mixing speed. The head space of the mixer is then subjected to a partial vacuum so as to promote the formation of small gas bubbles in the dough. The dough may then be allowed to rest for up to 10 minutes and be proved for 30 minutes to an hour. It is then divided into desired shapes which are passed through a tunnel kiln and are baked in the kiln and then cooled.

It has been reported that by performing the mixing of the dough in atmosphere comprising oxygen-enriched air, it is possible to use ascorbic acid as the sole improving agent, thus making it unnecessary to employ additives such as potassium bromate. Experiments demonstrating this result have been performed on a laboratory scale. However, there remains a need for a safe and reliable apparatus and method for using oxygen-enriched air in dough mixing on a commercial scale. This invention aims at providing apparatus and method that meet such need, particularly by flushing with water that part of an oxygen introduction conduit proximate a chamber in which the dough is mixed.

It is also known to use oxygen-enriched air in other bread making processes. See FR-A-2 515 001 which discloses an apparatus for mixing dough including a closable dough mixing chamber, and separate valved conduits for introducing water, flour and other ingredients and oxygen-enriched air into the chamber to enable a dough to be formed in an oxygen-enriched atmosphere.

According to the present invention there is provided apparatus for mixing dough, including a closable dough mixing chamber, a first conduit communicating at one end with the interior of the chamber and connectible to a source of oxygen or oxygen-enriched air, an automatically-operable valve in said first conduit whereby, in operation, the first conduit is able to be opened to the passage of oxygen or oxygen-enriched air into the interior of the chamber for chosen intervals of time, a second conduit communicating at one end with the interior of the chamber and connectible to a source of water, and an automatically-operable valve associated with said second conduit, whereby, in operation, the valve associated with second conduit may be opened to permit water to pass into the interior of the chamber for chosen periods of time, characterised in that the apparatus additionally includes a third conduit extending from a region of the second conduit upstream of the said automatically operable valve associated therewith and downstream of an additional automatically operable valve to a region of the first conduit downstream of the said automatically-operable valve associated with the first conduit, said additional valve being able to be opened so as to enable at least that part of said first conduit proximate the chamber to be flushed with water for chosen periods of time.

The apparatus according to the invention may additionally include a vent pipe communicating at one end with the interior of the chamber and at its other end with the ambient atmosphere, and an automatically-operable valve in said vent pipe, whereby in operation the vent pipe may be open during chosen time periods.

The apparatus according to the invention may additionally include a fourth conduit extending from a region of the second conduit downstream of said additional automatically-operable valve to the vent pipe whereby on opening said additional automatically-operable valve at least that part of the vent pipe proximate the chamber is able to be flushed with water.

The apparatus according to the invention may additionally include a flour hopper having an outlet leading to the interior of the chamber and at least one automatically operable valve in said outlet whereby, in operation, flour may be passed into said chamber during chosen periods of time.

The apparatus according to the invention may additionally include valve actuation control means, wherein said chamber has a lid, closure of which actuates a sensor to generate a signal to said control means and thereby to start a predetermined sequence of valve openings and closures. The control means may be arranged such that periods for which the valves in the first conduit and the vent pipe are open, are each insufficient for the composition of the gas in the head space of the chamber to become as rich in oxygen as said oxygen or oxygen-enriched air.

The apparatus according to the invention may additionally include in at least one agitator in said chamber, and a variable speed motor for driving said agitator. The automatically-operable valve in said first conduit may be arranged to be open during at least part of the period in which said motor is operating at a relatively slow speed, or is adapted to be open only during periods in which said motor is not operating.

The parts of the first conduit and the vent pipe which are flushed with water may have their internal surfaces formed of polytetrafluoroethylene.

The invention also provides a method of mixing dough, including the steps of supplying oxygen or oxygen-enriched air through a first conduit to the interior of a mixer chamber so as to create in the chamber an atmosphere comprising oxygen-enriched air, introducing flour, water and other dough making ingredients into the interior of the mixing chamber, the water being supplied through a second conduit, and mixing the dough in the chamber in the presence of said atmosphere comprising oxygen-enriched air, characterised in that prior to the introduction of said oxygen or oxygen-enriched air into the chamber, at least that part of the first conduit proximate to the chamber is flushed by passing water from the second to the first conduit via a third conduit.

We believe, that by employing an oxygen-enriched air atmosphere in the head space of the chamber, the atmosphere typically comprising from 40 to 60 per cent by volume of oxygen and from 60 to 40 per cent by volume of nitrogen, it is possible first to employ only ascorbic acid as an improving agent in the dough, and second to eliminate the need for a partial evacuation of the head space prior to mixing. Moreover, the apparatus according to the invention facilitates mixing under safe conditions and helps to prevent permanent accumulations of flour in the first conduit from arising.

The method and apparatus according to the invention will now be described by way of example with reference to the accompanying drawings, in which :

Figure 1 is a schematic diagram of a dough mixer, and

Figure 2 is a schematic diagram illustrating a control circuit for the pneumatically - actuated ball valves employed in the apparatus shown in Figure 1.

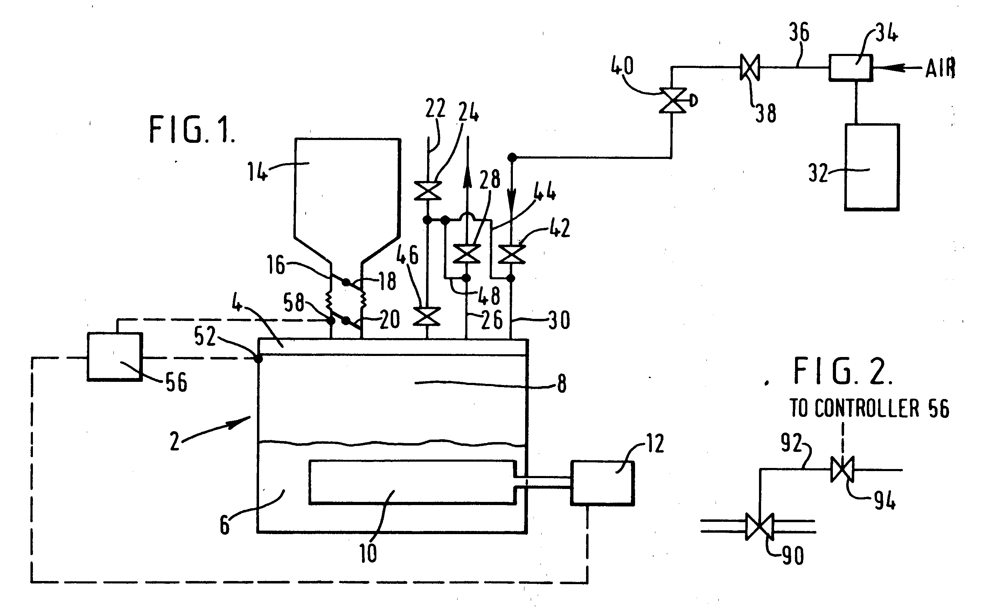

Referring to Figure 1 of the drawings, there is shown a dough mixer chamber 2 having a lid 4 and containing a mass 6 of ingredients which may be mixed to form a dough. The lid 4 shown in its closed position. There is a head space 8 above the surface of the mass 6 of ingredients in the mixer 2. The mixer 2 is provided with at least one agitator 10 driven by a suitable electric motor 12. The arrangement of agitator or agitators 10 and electric motor 12 may be the same as employed in the conventional dough mixers.

Various means are provided in association with the lid 4 for feeding flour, water and oxygen-enriched air into the mixer chamber 2 and for venting gas from the head space 8 of the mixer chamber 2. These means include a hopper 14 for flour having an outlet 16 terminating in the lid 4.

The outlet 16 is provided with automatically operable upper and lower butterfly valves 18 and 20, respectively. A water inlet conduit 22 also terminates in the lid 4. Pneumatically-actuated ball valves 24 and 46 are located in the conduit 22, the valve 46 being associated with the lid 4. A vent pipe 26 also terminates in the lid 4. Another pneumatically actuated ball valve 28 is disposed in the vent pipe 26. The vent pipe 26 has an outlet terminating in communication with the ambient atmosphere. The lid 4 is further provided with an inlet conduit 30 for oxygen-enriched air. In order to form the oxygen-enriched air, commercially pure oxygen is supplied from a source 32 thereof to a Witt gas proportioner or mixer 34 which mixes the oxygen with air to form a mixture of chosen composition. The mixer 34 and the source 32 of oxygen are typically located outside a room (not shown) in which the chamber 2 is located. The resulting mixture is supplied to a conduit 36 having a pneumatically-actuated ball valve 38 disposed therein and a manually operable flow control valve 40 disposed downstream of the valve 38. The conduit 36 terminates at its end remote from the gas mixer 34 in the oxygen-enriched air conduit 30. The conduit 30 has another pneumatically actuated ball valve 42 disposed therein.

Extending from a region of the water inlet conduit 22 downstream of the valve 24 is a conduit 44 which terminates in the oxygen-enriched air conduit 30 downstream of the valve 42. Another conduit 48 terminates at one of its ends in the conduit 44 and at its other end in a region of the vent pipe 26 upstream of the valve 28.

Opening the valve 24 thus places the conduits 44 and 48 in communication with the source of water (not shown) and enables the parts of the pipe 26 and conduit 30 nearest the lid 4 to be flushed with water.

Each of the pneumatically-actuated ball valves 24, 28, 38, 42 and 46 has an associated pilot line. One such ball valve is indicated by the reference 90 in Figure 2 and the pilot line is indicated by the reference 92 therein. A solenoid valve 94 is located in the pilot line 92. The solenoid valve 94 is actuated either directly or indirectly as a result of closing the lid 4 of the mixer chamber 2 shown in Figure 1.

Referring again to Figure 1, a sensor 52 is typically associated with the lid 4 such that a signal is generated on closure of the lid 4. Such signal is transmitted to a valve controller 56 which is adapted to open the solenoid valves associated with each one of ball valves 24, 28, 38, 42, and 46. The controller 56 is typically also operatively associated with a sensor 58 which is adapted to be engaged by the lower butterfly valve 20 of the flour hopper 12 when the valve 20 is in its closed position. The arrangement is such that the ball valves 38 and 42 cannot be open when the valves 20, 24 and 46 are open. The controller 56 is also employed to actuate the motor 12 that drives the agitator 10, although other means for actuating the motor 12 may be employed.

The pipe 26 preferably has at least that portion thereof extending between the valve 28 and its end in the lid 4 formed of a flexible, stainless steel, braided, polytetrafluoroethylene (PTFE) internally-lined hose. Similarly, that part of the conduit 30 extending from the valve 42 to its end in the lid 4 is formed of such hose. Such hoses are safe to use with oxygen and have the advantage that they offer a low friction surface to any particles of flour entering their interiors, whereby such particles can be readily flushed therefrom by passage of water therethrough. Safe operation of the apparatus shown in Figures 1 and 2 is thus facilitated.

The operation of the apparatus shown it Figures 1 and 2 to mix dough will now be described. With lid 4 of the chamber 2 open dough ingredients comprising fat, soya flour, yeast, ascorbic acid and, if desired, emulsifier are loaded into the interior of the mixer 2. The relative proportions of these ingredients may be selected in accordance with conventional practice for making bread by the Chorleywood Process. The lid 4 is then closed. A signal is thus generated and passed to the controller 56. The controller 56 thereupon provides signals opening the valves 18 and 20 to allow wheat flour to flow from the hopper 14 into the mixer 2. Simultaneously with the opening of the valves 18 and 20, the valves 24 and 46 are opened. As described with reference to Figure 2, the opening of the valves 24 and 46 is effected by opening solenoid valves associated therewith to apply a pneumatic pressure on valve members of the valves 24 and 46 in a valve-opening direction. The wheat flour employed in the operation of the apparatus may be of a kind conventionally used in making bread by the Chorleywood Process but will typically be unbleached and untreated. The relative proportions of wheat flour to water and other ingredients of dough may be as normally employed in the manufacture of bread by the Chorleywood Process. By opening the valves 24 and 46, water is caused to enter the interior of the mixer 2 mainly through the pipe 22 but also through the proximal ends of the pipe 26 and the conduit 30. The water is thus effective to flush flour and any particulate material from the pipe 26 and the conduit 30. Typically from 5 to 20 per cent of the total water flow into the chamber 2 is diverted through the pipe 26 and conduit 30. It is to be appreciated that the pipe 26 and conduit 30 will be arranged so as to avoid the creation of any internal volume in which water can be trapped.

After a predetermined time, the controller 56 generates a signal effective to close the valves 18, 20, 24 and 46. On closure of the valve 20, a signal is generated by the sensor 58 and relayed to the controller 56. The controller 56 thereupon generates a signal to open the solenoid valves in the pilot lines associated with the valves 28, 38 and 42 thus opening these valves. An oxygen-air mixture, typically including 60 per cent by volume of oxygen, then flows into the pipe 30 and enters the head space 8 of the mixer 2 displacing air therefrom through the vent pipe 26. Supply of the oxygen-air mixture to the head space 8 is continued for a predetermined period of time, say, 20 seconds, this period being sufficient for the composition of the atmosphere in the head space 8 to assume substantially the same composition as the incoming air-oxygen mixture. The controller 56 then generates signals to close the valves 28, 38 and 42 and to start operation of the motor 12 so as to agitate and mix the dough therein.

In the event that the motor 12 has a slow speed setting (or "star phase" as it is sometimes called) it is possible to start operation of the motor 12 and hence agitation of the mass 6 of ingredients simultaneously with the commencement of the supply of oxygen-air mixture to the head space 8, rather than at the termination of this supply.

After an initial period of mixing, the speed of the motor 12 may be increased to a maximum and mixing of the dough continued at the maximum speed for a period of, say, 4 to 5 minutes. After a chosen period of time, the motor 12 may be deactuated and mixing thus stopped. The dough may then be allowed to stand and prove, and after being removed from the mixer 2 may be divided into suitable shapes and passed into a kiln for baking in the normal manner.

Typically, in the apparatus shown in Figure 1, as a safety measure, the valves 24, 38, 42 and 46 are all arranged so that in the event of a failure of, for example, pneumatic supply the valves remain in the closed position while the valve 28 in the vent pipe 26 is arranged contrariwise such that in the event of a failure of the pneumatic air supply, the valve remains in the open position.

The apparatus shown in the drawings may be built to custom to mix dough. Alternatively, an existing dough mixer may be retro-fitted with an oxygen-air mixer and the necessary valves and pipes to operate in the manner described above.

Various changes and modifications may be made to the apparatus shown in the drawings without departing from the invention. For example, instead of employing the mixer 34, to make an oxygen-air mixture, pure oxygen may be supplied from the conduit 36 to the pipe 30. In such an example of the invention, the period for which such pure oxygen is supplied is limited to that necessary to give an atmosphere of chosen composition in the head space 8 (for example oxygen-enriched air containing 60 per cent by volume of oxygen), i.e. for a period insufficient for all the air to be displaced from the head space 8. In addition, although it will be generally unnecessary to provide a partial evacuation of the head space immediately prior to the addition of oxygen or oxygen-enriched air to the head space, such a partial evacuation may, if desired, be performed. It is also possible for the period of oxygen introduction into the headspace to last for as long as the slow speed operation of the mixer or even to extend into the period of high speed operation of the mixer.

If desired, a pressure sensor may be provided in the conduit 36 upstream of the valve 40 and arranged through the controller 56 to inhibit the start of the cycle of operations in the absence of oxygen pressure. Thus, it is possible to keep to a minimum the risk of mixing the dough in the absence of an oxygen-enriched atmosphere in the head space 8.

By employing an oxygen-enriched air atmosphere in the head space 8 of the mixer 2, conversion of ascorbic acid in the dough to dehydroascorbic acid in the presence of the flour enzyme ascorbic oxidase is facilitated to the extent that it becomes unnecessary to add other oxygen-releasing improvers such as potassium bromate to the wheat flour. Typically, the ascorbic acid may be employed at a level in the order of 80 to 200 parts by weight per million of a wheat flour. As a result of the enhancement of the oxidising effect of the ascorbic acid, it becomes unnecessary to apply a partial vacuum as a means of improving the crumbed cell structure in the finished bread.

## Claims

1. Apparatus for mixing dough, including a closable dough mixing chamber (2), a first conduit (30) communicating at one end with the interior of the chamber (2) and connectible to a source (32, 34) of oxygen or oxygen-enriched air, an automatically-operable valve (42) in said first conduit (30) whereby, in operation, the first conduit (30) is able to be opened to the passage of oxygen or oxygen-enriched air into the interior of the chamber for chosen intervals of time, a second conduit (22) communicating at one end with the interior of the chamber (2) and connectible to a source of water, and an automatically-operable valve (46) associated with said second conduit (22), whereby, in operation, the valve (46) associated with the second conduit (22) may be opened to permit water to pass into the interior of the chamber (2) for chosen periods of time, characterised in that the apparatus additionally includes a third conduit (44) extending from a region of the second conduit (22) upstream of the said automatically-operable valve (46) associated therewith and downstream of an additional automatically-operable valve (24) to a region of the first conduit (30) downstream of the said automatically-operable valve (42) associated with the first conduit (30), said additional valve (24) being able to be opened so as to enable at least that part of said first conduit (30) proximate the chamber (2) to be flushed with water for chosen periods of time.

2. Apparatus as claimed in claim 1, additionally including a vent pipe (26) communicating at one end with the interior of the chamber (2) and at its other end with the ambient atmosphere, and an automatically-operable valve (28) in said vent pipe (26), whereby in operation the vent pipe may be open during chosen time periods.

3. Apparatus as claimed in claim 2, additionally including a fourth conduit (48) extending from a region of the second conduit (22) downstream of said additional automatically-operable valve (24) to the vent pipe (26) whereby on opening the said additional automatically-operable valve (24) at least that part of the vent pipe (26) proximate the chamber (2) is able to be flushed with water.

4. Apparatus as claimed in Claim 2 or Claim 3, additionally including a flour hopper (14) having an outlet (16) leading to the interior of the chamber (2), and at least one automatically operable valve (18, 20) in said outlet (16) whereby, in operation, flour may be passed into said chamber during chosen periods of time.

5. Apparatus as claimed in any one of Claims 2 to 4, additionally including valve actuation control means (56), and wherein said chamber (2) has a lid (4), closure of which actuates a sensor (52) to generate a signal to said control means (56) and thereby to start a predetermined sequence of valve openings and closures.

6. Apparatus as claimed in Claim 5, in which the control means (56) is arranged such that periods for which the valves (42, 28) in the first conduit (30) and the vent pipe (26) are open, are each insufficient for the composition of the gas in the head space (8) of the chamber (2) to become as rich in oxygen as said oxygen or oxygen-enriched air.

7. Apparatus as claimed in any one of claims 2 to 6, in which there is at least one agitator (10) in said chamber (2), and a variable speed motor (12) for driving said agitator (10), and said valve (42) in said first conduit (30) is arranged to be open during at least part of the period in which said motor (12) is operating at a relatively slow speed, or is adapted to be open only during periods in which said motor (12) is not operating.

8. Apparatus as claimed in any one of claims 2 to 7, in which said parts of the first conduit (30) and the vent pipe (26) have their internal surfaces formed of polytetrafluoroethylene.

9. A method of mixing dough, including the steps of supplying oxygen or oxygen-enriched air through a first conduit to the interior of a mixer chamber so as to create in the chamber an atmosphere comprising oxygen-enriched air, introducing flour, water and other dough making ingredients into the interior of the mixing chamber, the water being supplied through a second conduit, and mixing the dough in the chamber in the presence of said atmosphere comprising oxygen-enriched air, characterised in that prior to the introduction of said oxygen or oxygen-enriched air into the chamber, at least that part of the first conduit proximate to the chamber is flushed by passing water from the second to the first conduit via a third conduit.

**Patentansprüche**

1. Vorrichtung zum Teigmischen mit einer verschließbaren Teigmischkammer (2), einer ersten Leitung (30), die an einem Ende mit dem Inneren der Kammer (2) in Verbindung steht und verbindbar ist mit einer Sauerstoffquelle (32, 34) oder einer Quelle mit sauerstoffangereicherter Luft, einem automatisch betätigbarem Ventil (42) in der ersten Leitung (30), womit beim Betrieb die erste Leitung (30) für den Durchfluß von Sauerstoff oder sauerstoffangereicherter Luft in das Innere der Kammer für gewählte Zeitintervalle geöffnet werden kann, einer zweiten Leitung (22), die an einem Ende mit dem Inneren der Kammer (2) in Verbindung ist und verbindbar ist mit mit einer Wasserquelle, und einem der zweiten Leitung (22) zugeordneten, automatisch betätigbaren Ventil (46), wobei beim Betrieb das der zweiten Leitung (22) zugeordnete Ventil (46) geöffnet werden kann, um einen Wasserfluß für gewählte Zeitintervalle in das Innere der Kammer (2) zu gestatten, dadurch gekennzeichnet, daß die Vorrichtung zusätzlich eine dritte Leitung (44) umfaßt, die sich von einem Bereich der zweiten Leitung (22) stromaufwärts des dieser zugeordneten, automatisch betätigbaren Ventils (46) und Stromabwärts eines zusätzlichen, automatisch betätigbaren Ventils (24) zu einem Bereich der ersten Leitung (30) stromabwärts des der ersten Leitung (30) zugeordneten automatisch betätigbaren Ventils (42) erstreckt, wobei das zusätzliche Ventil (24), geöffnet werden kann, um so zumindest den an die Kammer (2) angrenzenden Teil der ersten Leitung (30) mit Wasser für gewählte Zeitperioden spülen zu können.

2. Vorrichtung nach Anspruch 1, zusätzlich umfassend ein Entlüftungsrohr (26), das an einem Ende mit dem Inneren der Kammer (2) und an ihrem anderen Ende mit der Umgebungsatmosphäre in Verbindung steht, und ein automatisch betätigbares Ventil (28) in dem Entlüftungsrohr (26), womit beim Betrieb das Entlüftungsrohr während gewählter Zeitperioden geöffnet werden kann.

3. Vorrichtung nach Anspruch 2, zusätzlich umfassend eine vierte Leitung (48), welche sich von einem Bereich der zweiten Leitung (22) stromabwärts des automatisch betätigbaren Ventils (24) zu dem Entlüftungsrohr (36) erstreckt, wobei beim öffnen des zusätzlichen, automatisch betätigbaren Ventils (24) zumindest der an die Kammer (2) angrenzende Teil des Entlüftungsrohrs (26) mit Wasser gespült werden kann.

4. Vorrichtung nach Anspruch 2 oder 3, zusätzlich umfassend eine Mehlfüllvorrichtung (14) mit einem Auslaß (16), welcher ins Innere der Kammer (2) führt, und zumindest einem automatisch betätigbaren Ventil (18, 20) im Auslaß (16), womit beim Betrieb während gewählter Zeitperioden Mehl in die Kammer geleitet werden kann.

5. Vorrichtung nach einem der Ansprüche 2 bis 4, zusätzlich umfassend Ventilbetätigungssteuermittel (56) und bei der die Kammer (2) eine Abdeckklappe (4) aufweist, deren Schließen einen Sensor (52) betätigt, um ein Signal für die Steuermittel (56) zu erzeugen und dadurch eine vorbestimmte Sequenz von Ventilöffnungen und -schließungen zu starten.

6. Vorrichtung nach Anspruch 5, bei der das Steuermittel (56) so angeordnet ist, daß die Perioden, in welchen die Ventile (42, 28) in der ersten Leitung (30) und dem Entlüftungsrohr (26) offen sind, jeweils nicht ausreichen, daß die Zusammensetzung des Gases im Kopfbereich (8) der Kammer (2) so sauerstoffreich wird, wie der Sauerstoff oder die sauerstoffangereicherte Luft.

7. Vorrichtung nach einem der Ansprüche 2 bis 6, bei welcher zumindest ein Rührer (10) in der Kammer (2) und ein variabler Geschwindigkeitsmotor (12) zum Antreiben des Rührers (10) vorhanden ist, und das Ventil (42) in der ersten Leitung (30) so ausgebildet ist, um während zumindest einem Teil der Periode, in welcher der Motor (12) bei einer relativ niedrigen Geschwindigkeit betrieben wird, offen zu sein, oder geeignet ist, während nur der Perioden offen zu sein, in welcher der Motor (12) nicht in Betrieb ist.

8. Vorrichtung nach einem der Ansprüche 2 bis 7, bei welcher die Innenoberflächen der Teile der ersten Leitung (30) und des Entlüftungsrohrs (26) aus Polytetrafluorethylen gebildet sind.

9. Verfahren zum Teigmischen, mit den Schritten, daß Sauerstoff oder sauerstoffangereicherte Luft durch eine erste Leitung dem Inneren einer Mischkammer zugeführt wird, um so in der Kammer eine Atmosphäre zu bilden, welche sauerstoffangereicherte Luft enthält, daß Mehl, Wasser und andere teigbildende Zutaten in das Innere der Mischkammer eingeleitet werden, daß das Wasser durch eine zweite Leitung zugeführt wird, und daß der Teig in der Kammer in Anwesenheit der die sauerstoffangereicherte Luft umfassenden Atmosphäre gemischt wird, dadurch gekennzeichnet, daß vor dem Einleiten des Sauerstoffs oder der sauerstoffangereicherten Luft in die Kammer zumindest der Teil der ersten Leitung angrenzend an die Kammer durch Durchleiten von Wasser von der zweiten zu der ersten Leitung über eine dritte Leitung gespült wird.

**Revendications**

1. Appareil de pétrissage de pâte, comprenant une chambre (2) de pétrissage de pâte qui peut être fermée, un premier conduit (30) qui communique, à une première extrémité, avec l'intérieur de la chambre (2) et qui est destiné à être raccordé à une source (32, 34) d'oxygène ou d'air enrichi en oxygène, une soupape (42) commandée automatiquement et placée dans le premier conduit (30) afin que, pendant le fonctionnement, le premier conduit (30) puisse être ouvert pour le passage d'oxygène ou d'air enrichi en oxygène vers l'intérieur de la chambre pendant les intervalles choisis de temps, un second conduit (22) communiquant, à une première extrémité, avec l'intérieur de la chambre (2) et destiné à être raccordé à une source d'eau, et une soupape (46) commandée automatiquement et associée au second conduit (22) afin que, pendant le fonctionnement, la soupape (46) associée au second conduit (22) puisse être ouverte et permette le passage de l'eau à l'intérieur de la chambre (2) pendant des périodes choisies, caractérisé en ce que l'appareil comporte en outre un troisième conduit (44) partant d'une région du second conduit (22) qui se trouve en amont de ladite soupape (46) commandée automatiquement et associée à ce conduit et en aval d'une soupape supplémentaire (24) commandée automatiquement, vers une région du premier conduit (30) qui est en aval de ladite soupape (42) commandée automatiquement et associée au premier conduit (30), la soupape supplémentaire (24) pouvant être ouverte afin qu'elle permette le remplissage d'eau de la partie du premier conduit (30) proche de la chambre (2) au moins, pendant des périodes choisies.

2. Appareil selon la revendication 1, comprenant en outre un tube de ventilation (26), communiquant, à une première extrémité, avec l'intérieur de la chambre (2) et, à son autre extrémité, avec l'atmosphère ambiante, et une soupape (28) commandée automatiquement et placée dans le tube de ventilation (26), si bien que, pendant le fonctionnement, le tube de ventilation peut être ouvert pendant les périodes choisies.

3. Appareil selon la revendication 2, comprenant en outre un quatrième conduit (48) partant d'une région du second conduit (22) qui est en aval de ladite soupape supplémentaire (24) commandée automatiquement vers le cube de ventilation (26), afin que, lors de l'ouverture de ladite soupape supplémentaire (24) commandée automatiquement, la partie du tube de ventilation (26) qui est proche de la chambre (2) au moins puisse être remplie d'eau.

4. Appareil selon la revendication 2 ou 3, comportant en outre une trémie (14) à farine ayant une sortie (16) qui débouche à l'intérieur de la chambre (2) et au moins une soupape (18, 20) commandée automatiquement, placée dans cette sortie (16) de manière que, pendant le fonctionnement, la farine puisse être transmise à la chambre pendant des périodes choisies.

5. Appareil selon l'une quelconque des revendications 2 à 4, comprenant en outre un dispositif (56) de commande de manoeuvre de soupape, et dans lequel la chambre (2) possède un couvercle (4) dont la fermeture manoeuvre un capteur (52) destiné à créer un signal destiné au dispositif de commande (56) et ainsi à provoquer le début d'une séquence prédéterminée d'ouvertures et de fermetures de soupapes.

6. Appareil selon la revendication 5, dans lequel le dispositif de commande (56) est réalisé afin que les périodes pendant lesquelles les soupapes (42, 28) du premier conduit (30) et du tube de ventilation (26) sont ouvertes soient chacune insuffisantes pour que la composition du gaz dans l'espace libre supérieur (8) de la chambre (2) devienne aussi riche en oxygène que l'oxygène ou l'air enrichi en oxygène.

7. Appareil selon l'une quelconque des revendications 2 à 6, dans lequel un agitateur au moins (10) est présent dans la chambre (2), et un moteur à vitesse variable (12) est destiné à entraîner l'agitateur (10), et la soupape (42) placée dans le premier conduit (30) est destinée à être ouverte pendant une partie au moins de la période pendant laquelle le moteur (12) fonctionne à une vitesse relativement faible, ou est destinée à être ouverte uniquement pendant des périodes au cours desquelles le moteur (12) ne fonctionne pas.

8. Appareil selon l'une quelconque des revendications 2 à 7, dans lequel les parties du premier conduit (30) et du tube de ventilation (26) ont leurs surfaces internes formées de polytétrafluoréthylène.

9. Procédé de pétrissage de pâte, comprenant des étapes de transmission d'oxygène ou d'air enrichi en oxygène par un premier conduit vers l'intérieur d'une chambre d'un pétrin afin qu'une atmosphère comprenant de l'air enrichi en oxygène soit créée dans la chambre, d'introduction de farine, d'eau et d'autres ingrédients de fabrication de pâte a l'intérieur de la chambre de pétrissage, l'eau étant transmise par un second conduit, et de pétrissage de la pâte dans la chambre en présence de l'atmosphère comprenant l'air enrichi en oxygène, caractérisé en ce que, avant l'introduction de l'oxygène ou de l'air enrichi en oxygène dans la chambre, la partie du premier conduit proche de la chambre au moins est lavée par circulation d'eau du second conduit au premier conduit par l'intermédiaire d'un troisième conduit.

FIG. 1.

FIG. 2.

TO CONTROLLER 56

AIR